Europäisches Patentamt

European Patent Office

Office européen des brevets

(19)

(11) Publication number: **0 135 350**
**B1**

(12)

# EUROPEAN PATENT SPECIFICATION

(45) Date of publication of patent specification: **18.05.88**

(51) Int. Cl.⁴: **G 01 D 5/26**, G 02 B 6/26

(21) Application number: **84305435.4**

(22) Date of filing: **09.08.84**

(54) Systems for transmitting light.

(30) Priority: **25.08.83 US 526186**

(43) Date of publication of application:
**27.03.85 Bulletin 85/13**

(45) Publication of the grant of the patent:
**18.05.88 Bulletin 88/20**

(84) Designated Contracting States:
**AT BE CH DE FR GB IT LI LU NL SE**

(56) References cited:
**DE-A-2 920 489**
**DE-A-3 047 343**
**DE-A-3 145 795**
**GB-A-2 025 608**
**GB-A-2 090 654**

(73) Proprietor: **THE BABCOCK & WILCOX**
**COMPANY**
**1010 Common Street P.O. Box 60035**
**New Orleans Louisiana 70160 (US)**

(72) Inventor: **Chappell, Robert E.**
**736 Lanreco Boulevard**
**Lancaster Ohio 43130 (US)**

(74) Representative: **Cotter, Ivan John et al**
**D. YOUNG & CO. 10 Staple Inn**
**London WC1V 7RD (GB)**

Courier Press, Leamington Spa, England.

# Description

This invention relates to systems for transmitting light from a first location to a second location. Such a system may, for instance, comprise an alarm system for the detection and transmission of light from a process measuring device to an alarm actuating means, for example to indicate when a process variable varies from a predetermined range.

The level of a liquid within a tube or against a window has been used for many years to provide a visual indication of a process variable, etc. Some examples of the foregoing are a thermometer for measuring temperature, a manometer for measuring pressure and sight glasses for determining liquid levels within a container. The latter are used in steam boiler installations to provide a visual indication of the water level within the boiler. The foregoing devices are adequate if the operator is near the boiler. However, control rooms for such boiler installations are now being located remotely from the boiler. Thus, systems had to be developed for the transmission of such water level measurements to the remote control rooms. These systems typically utilise lenses, beam-splitters, etc. to transmit light, which passes through or is reflected from these measuring devices, to a viewing screen within the control room. As such, these systems are complex and relatively expensive because of the apparatus required to detect and transmit the light from the measuring device to the control room.

UK Patent Application Publication No. GB—A—2 025 608 discloses a system for transmitting light which comprises an electronic unit incorporating a light source or sources and a detector means. Light of two different (but predetermined and invariant) wavelength distributions is emitted simultaneously by the light source or sources into an optical fibre, an end of which is connected to a transducer disposed outside of the electronic unit. The light is then directed back from the transducer, to the detector means incorporated in the electronic unit, via a second optical fibre. The transducer includes an optical filter which is moved, in accordance with a physical magnitude being measured, in such a manner as to influence one of the wavelength distributions more than the other. Specifically, the filter generates, in the light sent back from the transducer to the detector means, one or more stabilisation signals for the fibre optics and optoelectronics and, possibly, one or more measuring signals.

UK Patent Application No. GB—A—2 090 654 and German Patent Application No. DE—A—3 047 343 disclose systems generally similar to that disclosed in GB—A—2 025 608.

According to the invention there is provided a system for transmitting light from a first location to a second location remote from the first location, the system comprising:

a light source disposed at the first location and operative to provide light of a colour that depends upon a condition of an apparatus disposed at the first location;

a first optical fibre having one end adjacent the light source;

an illumination screen positioned adjacent the other end of the first optical fibre so that light transmitted thereto by the first optical fibre becomes incident on and illuminates a portion of the screen;

one or more second optical fibres having one end so positioned with respect to said portion of the illumination screen as to transmit light from the light source transmitted by the first optical fibre and incident on said portion of the screen and having the other end disposed at the second location; and

detector means positioned at the other end of the second optical fibre or fibres and operative to detect the colour of the light transmitted by the second optical fibre or fibres.

A preferred system embodying the invention and described hereinbelow utilises dependable, inexpensive apparatus for the transmission of light from a measuring device to a viewing screen, and also provides for the actuation of an alarm(s) if a process variable being monitored varies from a predetermined range. More specifically, the preferred system uses optical fibres for the transmission of light from the measuring device to a viewing screen, which is within a control room, and from the viewing screen to optical diodes which control the actuation of alarm devices. An optical fibre is positioned adjacent each monitoring location, e.g. a bottom port and a top port of a steam boiler. The foregoing optical fibre transmits the light, e.g. either red or green light, which passes through the measuring device for that particular monitoring location to a matte screen located within the control room. A pair of optical fibres is dedicated for use with each of the foregoing optical fibres and is positioned relative to the screen to detect the light incident upon the screen and transmit this light to optical diodes which are provided with filters to permit the selective actuation of same depending upon the colour of the light being transmitted. The optical diodes selectively control the actuation of alarm(s) in response to the condition of the process variable being monitored.

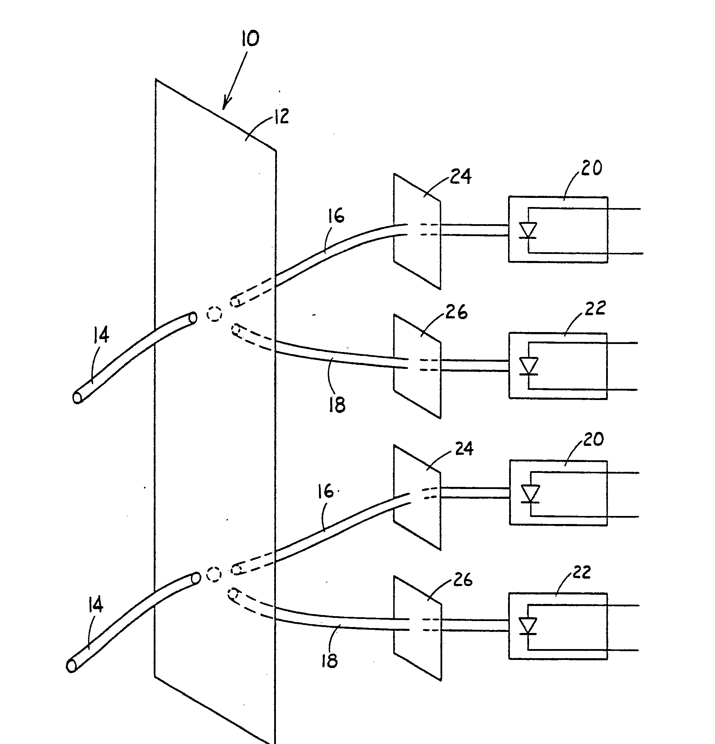

The invention will now be further described, by way of illustrative and non-limiting example, with reference to the accompanying drawing, the sole figure of which is a schematic diagram of a system embodying the invention.

The sole figure of the drawing is a schematic diagram of an alarm system 10 using fibre optics for transmission and detection purposes. The alarm system 10 uses a matte screen 12 upon which light transmitted by an optical fibre 14 is incident. Ends of a pair of optical fibres 16 and 18, which can be located either on the same side of the matte screen 12 as the optical fibre 14 or on the opposite side of the screen 12, are positioned to receive light incident upon the screen 12. (If the ends of the fibres 16 and 18 are on the same side

2

of the screen 12 as the fibre 14, the ends receive light reflected from the screen, whereas if they are on the opposite side to the fibre 14 they receive light transmitted by the screen.) The opposite ends of the optical fibres 16 and 18 are connected to optical (light sensitive) diodes 20, 22, respectively, which are provided with a green filter 24 and a red filter 26, respectively. Outputs of the optic diodes 20, 22 can be used to actuate alarms, etc., as will be hereinafter described.

The optical fibre 14 is typically positioned so as to be capable of transmitting light from a measuring device (not shown), such as a gauge for measuring water within a steam boiler. Thus, for such a boiler installation, an optical fibre 14 would be dedicated for use with the bottom port, and another optical fibre 14 would be used exclusively for the top port. In addition, each of the foregoing optical fibres 14 would have a pair of optical fibres 16 and 18 dedicated for use in association therewith. Typically, in such an installation, the optical fibre 14 associated with the port being monitored transmits either red or green light depending upon the water level at that port. For example, if the water level is below the bottom port or below the top port, a red light will be transmitted by the optical fibre 14 associated with that port to the matte screen 12. Similarly, if the water level is above the bottom port or above the top port, a green light will be transmitted by the optical fibre 14 associated with that port to the screen 12. The end of each optical fibre 14 that is adjacent the matte screen 12 is positioned so as to "project" the foregoing transmitted light onto the screen 12 so as to form a "spot" thereon. A pair of optical fibres 16 and 18 is dedicated for use with each optical fibre 14 and is positioned relative to the screen 12 and the "spot" formed thereon by its associated optical fibre 14 so as to receive the light incident upon the screen 12 and transmit the light to the optical diodes 20 and 22 associated therewith. If green light is incident upon the matte screen 12, the optical fibres 16 and 18 associated with the optical fibre 14 transmitting the green light will, in turn, transmit the green light to their associated respective optical diodes 20 and 22. However, only the optical diode 20 will be actuated since the green light can pass through the green filter 24 associated therewith but is blocked by the red filter 26 associated with the optical diode 22. Conversely, if red light is incident upon the screen 12, the optical fibres 16 and 18 associated with the optical fibre 14 transmitting the red light will, in turn, transmit the red light to their respective optical diodes 20 and 22. However, only the optical diode 22 will be actuated since the red light can pass through the red filter 26 associated therewith but is blocked by the green filter 24 associated with the optical diode 20. Depending upon which optical diode 20, 22 is actuated, alarms can be selectively actuated to indicate the presence or absence of a particular condition, such as high or low water level within a boiler.

From the foregoing, it will be apparent that even though only two monitoring locations were considered, i.e. the bottom port and the top port of a boiler, any number of monitoring locations could be employed and each monitoring location would be provided with an optical fibre 14, and each optical fibre 14 would have associated therewith a pair of optical fibres 16 and 18 along with their respective optical diodes 20 and 22 and filters 24 and 26. In addition, it should be noted that the outputs of each pair of optical diodes 20, 22 associated with a specific monitoring location could be connected to the input or an "OR" gate or circuit (not shown) which would actuate an alarm when both of the optical diodes 20, 22 are unactuated, thus indicating a fault condition, i.e. the loss of light at a specific monitoring location. Thus, this alarm system 10 can monitor any number of specific measuring locations and is failsafe in its operation.

**Claims**

1. A system for transmitting light from a first location to a second location remote from the first location, the system comprising:

a light source disposed at the first location and operative to provide light of a colour that depends upon a condition of an apparatus disposed at the first location;

a first optical fibre (14) having one end adjacent the light source;

an illumination screen (12) positioned adjacent the other end of the first optical fibre (14) so that light transmitted thereto by the first optical fibre (14) becomes incident on and illuminates a portion of the screen (12);

one or more second optical fibres (16, 18) having one end so positioned with respect to said portion of the illumination screen (12) as to transmit light from the light source transmitted by the first optical fibre and incident on said portion of the screen and having the other end disposed at the second location; and

detector means (20, 22, 24, 26) positioned at the other end of the second optical fibre or fibres (16, 18) and operative to detect the colour of the light transmitted by the second optical fibre or fibres (16, 18).

2. A system according to claim 1, wherein said other end of the first optical fibre (14) and said one end of the one or more second optical fibres (16, 18) are located on the same side of the illumination screen (12).

3. A system according to claim 1, wherein said other end of the first optical fibre (14) is located on one side of the illumination screen (12) and said one end of the one or more second optical fibres (16, 18) is or are located on the other side of the illumination screen (12).

4. A system according to claim 1, claim 2 or claim 3, including alarm means selectively actuable by the detector means (20, 22, 24, 26) in response to the colour of light being transmitted by the one or more second optical fibres (16, 18).

5. A system according to any one of the preceding claims, including means actuatable by the detector means (20, 22) when the transmission of light by the one or more second optical fibres (16, 18) is interrupted to signify loss of light at the first location.

6. A system according to any one of the preceding claims, wherein the light source is operative to provide light of either a first colour or a second colour in dependence upon the condition of the apparatus disposed at the first location.

7. A system according to claim 6, wherein there are two said second optical fibres (16, 18) and the detector means (20, 22, 24, 26) comprises a first detector arrangement (20, 24) connected to the other end of one (16) of the second optical fibres and operative to indicate receipt thereby only of light of the first colour and a second detector arrangement (22, 26) connected to the other end of the other (18) of the second optical fibres and operative to indicate receipt thereby only of light of the second colour.

8. A system according to claim 7, wherein the first detector arrangement (20, 24) comprises a first optical filter (24) that will pass light of the first colour, but not light of the second colour, and a first optical detector (20) positioned to receive light passed by the first optical filter, and wherein the second detector arrangement comprises a second optical filter (26) that will pass light of the second colour, but not light of the first colour, and a second optical detector (22) positioned to receive light passed by the second optical filter.

9. A system according to any one of the preceding claims, wherein the illumination screen (12) is a viewing screen.

10. A system according to claim 9, wherein the viewing screen (12) is disposed at the second location.

11. A system according to any one of the preceding claims, wherein the first location is that of a boiler installation and the light source is operative to provide light of a colour that depends upon a condition of the boiler, and wherein the second location is that of a control room for the boiler installation.

12. A light transmission arrangement comprising a plurality of systems according to any one of the preceding claims, wherein the respective systems have respective light sources all disposed at the same first location and each being operative to provide light of a colour that depends upon whether the same parameter of the apparatus disposed at the first location is above or below a respective different value, the systems comprise a common illumination screen (12) disposed at the same second location so that light transmitted thereto by the first optical fibres (14) of the respective systems becomes incident on and illuminates respective portions of the screen, and the respective systems comprise respective detector means (20, 22, 24, 26) all disposed at the second location.

**Patentansprüche**

1. System zur Übertragung von Licht von einer ersten Stelle zu einer von der ersten Stelle entfernten zweiten Stelle mit:

einer bei der ersten Stelle angeordneten Lichtquelle, die Licht einer Farbe liefert, die von einer Bedingung einer an der ersten Stelle angeordneten Vorrichtung abhängt,

einer ersten optischen Faser (14) mit einem Ende nahe der Lichtquelle,

einem Beleuchtungsschirm (12), der nahe dem anderen Ende der ersten optischen Faser (14) derart angeordnet ist, daß durch die erste optische Faser (14) zu ihm übertragenes Licht auf einen Teil des Schirmes (12) auffällt und diesen beleuchtet,

einer oder mehreren zweiten optischen Fasern (16, 18) mit einem bezüglich dieses Teils des Beleuchtungsschirms (12) derart angeordneten Ende, daß sie Licht von der Lichtquelle, das durch die erste optische Faser übertragen wird und auf den Teil des Schirmes auffällt, übertragen, und deren anderes Ende bei der zweiten Stelle angeordnet ist, und

Detektoreinrichtungen (20, 22, 24, 26), die an dem anderen Ende der zweiten optischen Faser oder Fasern (16, 18) angeordnet sind und so arbeiten, daß sie die Farbe des von der zweiten optischen Faser oder den zweiten optischen Fasern (16, 18) übertragene Licht ermitteln.

2. System nach Anspruch 1, bei dem das andere Ende der ersten optischen Faser (14) und das eine Ende der einen oder mehreren zweiten optischen Fasern (16, 18) an der gleichen Seite des Beleuchtungsschirmes (12) liegen.

3. System nach Anspruch 1, bei dem das andere Ende der ersten optischen Faser (14) auf einer Seite des Beleuchtungsschirmes (12) liegt und das eine Ende der einen oder mehreren zweiten optischen Fasern (16, 18) auf der anderen Seite des Beleuchtungsschirmes (12) liegt bzw. liegen.

4. System nach Anspruch 1, Anspruch 2 oder Anspruch 3 mit Alarmeinrichtungen, die durch die Detektoreinrichtungen (20, 22, 24, 26) als Reaktion auf die Farbe von Licht, das von einer oder mehreren zweiten optischen Fasern (16, 18) übertragen wird, selektiv betätigbar ist.

5. System nach einem der vorausgehenden Ansprüche mit Einrichtungen, die durch die Detektoreinrichtungen (20, 22) betätigbar sind, wenn die Übertragung von Licht durch die eine oder mehreren zweiten optischen Fasern (16, 18) unterbrochen wird, um Lichtverlust an der ersten Stelle anzuzeigen.

6. System nach einem der vorausgehenden Ansprüche, bei dem die Lichtquelle so arbeitet, daß sie Licht entweder einer ersten Farbe oder einer zweiten Farbe in Abhängigkeit von der Bedingung der an der ersten Stelle angeordneten Vorrichtung liefert.

7. System nach Anspruch 6, bei dem zwei der zweiten optischen Fasern (16, 18) vorliegen und die Detektoreinrichtungen (20, 22, 24, 26) eine erste Detektoranordnung (20, 24), die mit dem anderen Ende einer (16) der zweiten optischen Fasern verbunden ist und dabei nur den Empfang von Licht der ersten Farbe anzeigt, und eine zweite Detektoranordnung (22, 26), die mit dem anderen Ende der anderen (18) der beiden optischen Fasern verbunden ist und dabei nur den Empfang von Licht der zweiten Farbe anzeigt, aufweisen.

8. System nach Anspruch 7, bei dem die erste Detektoranordnung (20, 24) ein erstes optisches Filter (24), das Licht der ersten Farbe, aber nicht Licht der zweiten Farbe durchläßt, und einen ersten optischen Detektor (20), der so angeordnet ist, daß er durch das erste optische Filter hindurchgegangenes Licht aufnimmt, besitzt und bei dem die zweite Detektoranordnung ein zweites optisches Filter (26), das Licht der zweiten Farbe, aber nicht Licht der ersten Farbe hindurchgehen läßt, und einen zweiten optischen Detektor (22), der so angeordnet ist, daß er durch das zweite optische Filter hindurchgegangenes Licht aufnimmt, besitzt.

9. System nach einem der vorausgehenden Ansprüche, bei dem der Beleuchtungsschirm (12) ein Beobachtungsschirm ist.

10. System nach Anspruch 9, bei dem der Beobachtungsschirm (12) bei der zweiten Stelle angeordnet ist.

11. System nach einem der vorausgehenden Ansprüche, bei dem die erste Stelle jene einer Kocheranlage ist und die Lichtquelle so arbeitet, daß sie Licht einer Farbe liefert, die von einer Bedingung des Kochers abhängt, und bei dem die zweite Stelle jene eines Kontrollraumes für die Kocheranlage ist.

12. Lichtübertragungsanordnung mit mehreren Systemen nach einem der vorausgehenden Ansprüche, bei der die betreffenden Systeme jeweils Lichtquellen haben, die alle an der gleichen ersten Stelle angeordnet sind und von denen jede so arbeitet, daß sie Licht einer Farbe liefert, die davon abhängt, ob der gleiche Parameter der an der ersten Stelle angeordneten Vorrichtung oberhalb oder unterhalb eines speziellen unterschiedlichen Wertes liegt, die Systeme einen gemeinsamen Beleuchtungsschirm (12) haben, der an der gleichen zweiten Stelle derart angeordnet ist, daß von den ersten optischen Fasern (14) der betreffenden Systeme dorthin übertragenes Licht auf ihn auffällt und jeweils Teile des Schirmes beleuchtet, und die betreffenden Systeme jeweils Detektoreinrichtungen (20, 22, 24, 26) aufweisen, die alle an der zweiten Stelle angeordnet sind.

**Revendications**

1. Un systême pour transmettre de la lumière d'un premier emplacement vers un second vers un second emplacement distant du premier emplacement, le systême comprenant:
une source lumineuse placée au premier emplacement et produisant de la lumière d'une couleur qui dépend d'une condition d'un appareil se trouvant au premier emplacement;

une première fibre optique (14) ayant une première extrémité adjacente à la source lumineuse;

un écran illuminé (12) placé en position adjacente à la seconde extrémité de la première fibre optique (14), de façon que la lumière transmise vers cet écran par la première fibre optique (14) tombe sur une partie de l'écran (12) et l'illumine;

une ou plusieurs secondes fibres optiques (16, 18) dont une première extrémité est placée par rapport à la partie précitée de l'écran illuminé (12) de façon à transmettre la lumière provenant de la source lumineuse qui est transmise par la première fibre optique et qui tombe sur la partie précitée de l'écran, et dont la seconde extrémité se trouve au second emplacement; et

des moyens détecteurs (20, 22, 24, 26) placés à la seconde extrémité de la seconde fibre optique ou des secondes fibres optiques (16, 18) et qui détectent la couleur de la lumière transmise par la seconde fibre optique ou les secondes fibres optiques (16, 18).

2. Un systême selon la revendication 1, dans lequel la seconde extrémité de la première fibre optique (14) et la première extrémité de la seconde fibre optique ou des secondes fibres optiques (16, 18) se trouvent du même côté de l'écran illuminé (12).

3. Un systême selon la revendication 1, dans lequel la seconde extrémité de la première fibre optique (14) se trouve d'un côté de l'écran illuminé (12) et la première extrémité de la seconde fibre optique ou des secondes fibres optiques (16, 18) se trouve de l'autre côté de l'écran illuminé (12).

4. Un systême selon la revendication 1, la revendication 2 ou la revendication 3, comprenant des moyens d'alarme qui peuvent être déclenchés sélectivement par les moyens détecteurs (20, 22, 24, 26) sous la dépendance de la couleur de la lumière qui est transmise par la seconde fibre optique ou les secondes fibres optiques (16, 18).

5. Un systême selon l'une quelconque des revendications précédentes, comprenant des moyens qui peuvent être actionnés par les moyens détecteurs (20, 22) lorsque la transmission de lumière par la seconde fibre optique ou les secondes fibres optiques (16, 18) est interrompue, ce qui indique une perte de lumière au premier emplacement.

6. Un systême selon l'une quelconque des revendications précédentes, dans lequel la source lumineuse fournit de la lumière d'une première couleur ou d'une seconde couleur sous la dépendance de la condition de l'appareil qui se trouve au premier emplacement.

7. Un systême selon la revendication 6, dans lequel il y a deux secondes fibres optiques (16, 18) et les moyens détecteurs (20, 22, 24, 26) comprennent une première structure de détecteur (20, 24) connectée à la seconde extrémité de l'une (16) des secondes fibres optiques et conçue de façon à indiquer la réception par cette structure de la lumière de la première couleur seulement, et une seconde structure de détecteur (22, 26) connectée à la seconde extrémité de l'autre (18) seconde fibre optique, et conçue de façon à indiquer la réception par cette structure de la lumière de la seconde couleur seulement.

8. Un système selon la revendication 7, dans lequel la première structure de détecteur (20, 24) comprend un premier filtre optique (24) qui transmet la lumière de la première couleur, mais non la lumière de la seconde couleur, et un premier détecteur optique (20) placé de façon à recevoir la lumière transmise par le premier filtre optique, et dans lequel la seconde structure de détecteur comprend un second filtre optique (26) qui transmet la lumière de la seconde couleur, mais non la lumière de la première couleur, et un second détecteur optique (22) qui est placé de façon à recevoir la lumière transmise par le second filtre optique.

9. Un système selon l'une quelconque des revendications précédentes, dans lequel l'écran illuminé (12) est un écran d'observation.

10. Un système selon la revendication 9, dans lequel l'écran d'observation (12) se trouve au second emplacement.

11. Un système selon l'une quelconque des revendications précédentes, dans lequel le premier emplacement est celui d'une installation de chaudière, et la source lumineuse fournit de la lumière d'une couleur qui dépend d'une condition de la chaudière, et dans lequel le second emplacement est celui d'une salle de commande pour l'installation de chaudière.

12. Un installation de transmission de lumière comprenant un ensemble de systèmes selon l'une quelconque des revendications précédentes, dans laquelle les systèmes respectifs comportent des sources lumineuses respectives, toutes disposées au même premier emplacement, et chacune d'elles fournissant de la lumière d'une couleur qui est différente selon que le même paramètre de l'appareil se trouvant au premier emplacement est supérieur ou inférieur à une valeur différente respective, les systèmes comprennent un écran illuminé commun (12) situé au second emplacement, de façon que la lumière transmise vers cet écran par les premières fibres optiques (14) des systèmes respectifs tombe sur l'écran et illumine des parties respectives de l'écran, et les systèmes respectifs comprennent des moyens détecteurs respectifs (20, 22, 24, 26), tous disposés au second emplacement.